# EUROPÄISCHE PATENTANMELDUNG

(11) **EP 1 752 427 A1**
(43) Veröffentlichungstag der Anmeldung: **14.02.2007**
(21) Anmeldenummer: 06015762.5
(22) Anmeldetag: 28.07.2006
(51) Int. Cl.: C03C 25/10, C03C 13/00, C03C 3/083

(54) **Brandschutzgewebe**

(30) Priorität: 28.07.2005 DE 102005036029
(71) Anmelder: Klevers GmbH & Co. KG, 41199 Mönchengladbach (DE)
(72) Erfinder: Kampas, Lampros A., 41564 Kaarst (DE)
(74) Vertreter: Christophersen, Ruth

(57) **Zusammenfassung**

Es wird eine Faserstruktur auf der Basis von Glas mit einem SiO₂-Anteil über 50 Gewichtsprozent, bezogen auf das Glas, beansprucht, die dadurch gekennzeichnet, dass das Glas mit Al₂O₃ oder einem Al₂O₃-Mischoxid ausgerüstet ist. Es wird eine Faserstrukur erhalten, die unabhängig davon, ob dieses Glas als Faser, Faden oder Gewebe ist oder in ähnlicher Form vorliegt, eine deutlich verbesserte Temperaturbeständigkeit aufweist.

## Beschreibung

Die vorliegende Erfindung betrifft eine Faserstruktur auf der Basis von Glas mit einem SiO₂-Anteil über 50 Gew.-%, bezogen auf das Glas, ein Verfahren zur Herstellung der Faserstruktur auf Basis von Glas sowie die Verwendung dieser Faserstruktur.

Glasfasern sind ein Sammelbegriff für Fasern aus Glas, die aufgrund ihrer wärmeisolierenden Eigenschaften und ihrer Nichtbrennbarkeit in weitem Umfang technische Verwendung finden. Ein weiterer Vorteil dieser Werkstoffe ist, dass sie gegen Öle, Fette, Lösungsmittel und organische Säure resistent sind, so dass sie bei hohen Temperaturen auch für verfahrenstechnische Zwecke eingesetzt werden können.

Ein wesentliches Einsatzgebiet der Glasfasern ist der Brandschutz und die Verwendung als Isolier-/Dämmmaterial bei hohen Temperaturen.

Eines der wichtigsten Kriterien zur Definition der Temperaturbeständigkeit von Glasfasern stellt die Zugfestigkeit dar. Diese mechanische Belastungsfähigkeit eines Garns oder Gewebes dient als eine Grundlage für die meisten Anwendungen. Eine Steigerung der Leistungsfähigkeit im Bereich von hohen Temperaturen kann durch die Auswahl der Glasqualität und durch spezielle Ausrüstungen erreicht werden. Aus dem Stand der Technik bekannte Materialien sind Polymer-, Metall- und/oder Oxid-Zubereitungen sowie Kieselsäure und Schichtminerale.

Beim Brandschutz spielen neben der eigentlichen Nichtbrennbarkeit bzw. Schwerentflammbarkeit der eingesetzten Materialien auch weitere Eigenschaften wie Rauchentwicklung bei hohen Temperaturen und das Freisetzen von Inhaltsstoffen und Zersetzungsprodukten eine wichtige Rolle. Es besteht ein steter Bedarf an Produkten mit verbesserten Temperatureigenschaften, die insbesondere die Beständigkeit der Glasfaserprodukte bei höheren Temperaturen betreffen, wobei der textile Charakter erhalten bleiben soll.

Gegenstand der vorliegenden Erfindung ist demgemäß eine Faserstruktur auf der Basis von Glas mit einem SiO₂-Anteil über 50 Gew.-%, bezogen auf das Glas,
dadurch gekennzeichnet,
dass das Glas mit Al₂O₃ oder einem Al₂O₃-Mischoxid ausgerüstet ist.

Als Gläser können im Rahmen der vorliegenden Erfindung beliebige Gläser eingesetzt werden, aus denen Faser- oder Textilstrukturen hergestellt werden können.

Faserstruktur im Sinne der vorliegenden Erfindung bedeutet jede beliebige, dem Fachmann bekannte Faser- oder Textilstruktur, insbesondere zählen hierzu Filamente, Fasern, Fäden, Rowings, Garne, Zwirne, Schnüre, Bänder, Gewebe, Gelege, Gewirke, Gestricke, Geflechte, Tissues (Nonwoven, d.h. solche Strukturen, in denen die einzelnen Fasern in ungeregeltem Zustand innerhalb des Flächengebildes vorliegen). Die Faserstrukturen sind in den Regel röntgenamorph, d.h. nicht kristallin.

Überraschenderweise wurde festgestellt, dass eine Ausrüstung von Glas, unabhängig davon, ob dieses Glas als Faser, Faden oder Gewebe ist oder in ähnlicher Form vorliegt, mit feinteiligem Al₂O₃, insbesondere solchen Formen, die dispergierbar sind, zu einer Faserstruktur führt, die eine verbesserte Temperaturbeständigkeit hat, als die Gläser mit handelsüblichen Ausrüstungen, wobei eine Faserstruktur erhalten wird, deren texiler Charakter erhalten bleibt und deren Griff gegenüber dem bei aus dem Stand der Technik bekannten Fasern, deutlich verbessert ist. Durch den verbesserten Griff ist die erfindungsgemäße Faserstruktur auch dazu geeignet, im dekorativen Bereich, z. B. als Brandschutzvorhänge etc. eingesetzt zu werden. Ein weiterer Vorteil einer Ausrüstung des Glases mit Al₂O₃ oder einem Al₂O₃-Mischoxid ist, dass es sich hierbei um mineralische Grundstoffe handelt, die nicht nur bei der Herstellung, sondern auch im Gegensatz zu Beschichtungen mit Polymeren auch bei der Entsorgung unproblematisch sind.

Das Al₂O₃ bzw. das Mischoxid wird vorzugsweise in einer Menge von 0,2 - 10 Gew.-%, bezogen auf die auszurüstende Faserstruktur, aufgebracht. Die Menge sollte so eingestellt werden, dass die Oberfläche der Faserstruktur derart beschichtet ist, dass die gewünschte Erhöhung der Temperaturstabilität erreicht wird, Struktur und Erscheinungsbild der Textilstruktur sich aber nicht nachteilig verändern.

Auch ist es bevorzugt, wenn das aufgebrachte Al₂O₃ bzw. das Mischoxid eine solche Teilchengröße aufweist, dass die Teilchen mit dem Auge nicht sichtbar sind, und dass auch das Erscheinungsbild der Faserstruktur, wie Griff, Festigkeit, Steifigkeit etc., sich gar nicht oder nur wenig durch das Aufbringen des Al₂O₃ bzw. das Mischoxid ändern. Vorzugsweise wird Al₂O₃ bzw. das Mischoxid in dispergierter Form oder als kolloidale Lösung aufgebracht.

Dies hat den Vorteil, dass in Dispersionen das Al₂O₃ bzw. das Mischoxid in feinteiliger Form vorliegt und so eine gleichmäßige Verteilung möglich ist. Vorzugsweise weisen die Primärteilchen, d.h. das Al₂O₃, das auf die Faserstruktur aufgebracht wird, eine Teilchengröße unter 100 nm, insbesondere unter 50, und besonders bevorzugt zwischen 20 und 50 nm auf. Auf der ausgerüsteten Faserstruktur liegt das Al₂O₃ bzw. das Mischoxid als Agglomerat vor, die Teilchengröße dieser Agglomerate liegt vorzugsweise unter 500 nm, insbesondere zwischen 100 und 200 nm.

Als Al₂O₃ oder Al₂O₃-Mischoxide können Produkte aus beliebigen Herstellungsverfahren eingesetzt werden, wobei sich Produkte, die durch Flammenpyrolyse oder Flammenhydrolyse erhalten werden, als besonders geeignet erwiesen haben. Es wurde festgestellt, dass diese Oxide sich besonders gut dispergieren lassen. Als Mischoxide von Al₂O₃ kommen insbesondere solche mit SiO₂, TiO₂, ZrO₂ und/oder B₂O₃ in Betracht.

In einer bevorzugten Ausführungsform der vorliegenden Erfindung ist die Faserstruktur farbig. Um diese Farbwirkung zu erreichen, enthält die Faserstruktur ein hochtemperaturbeständiges Pigment oder es wird auf das Glas aufgebracht. Als Pigmente kommen insbesondere die in der Natur vorkommenden und synthetischen anorganischen Pigmente in Betracht. Die Pigmente haben die Aufgabe, die Erscheinung der erfindungsgemäßen Faserstruktur ansprechender zu machen.

In einer weiteren Ausführungsform der vorliegenden Erfindung werden solche Pigmente ausgewählt, die sich bei einer definierten Temperatur unterhalb der maximalen Einsatztemperatur der Faserstruktur zersetzen bzw. einen Farbwechsel durchlaufen, so dass erkennbar ist, dass die Faserstruktur in der Anwendung bereits einmal eine bestimmte Temperatur überschritten hat, nämlich die, bei welcher sich das Pigment zersetzt bzw. einen Farbwechsel durchläuft. Vorzugsweise ist mindestens ein Pigment enthalten, dass eine Temperaturbeständigkeit von 300 bis 500°C unterhalb der Höchstbelastungstemperatur der Faserstruktur hat. Dieser Farbwechsel kann als Hinweis dienen, die Faserstruktur bzw. die daraus hergestellten Produkte zu überprüfen und ggf. auszutauschen ist. In einer besonders bevorzugten Ausführungsform werden mindestens zwei Pigmente mit unterschiedlicher Temperaturstabilität eingesetzt. Wenn das Produkt, welches die erfindungsgemäße Faserstruktur enthält, einer Temperatur ausgesetzt wird, bei welcher sich eines der beiden enthaltenen Pigmente zersetzt, findet ein Farbwechsel der Faserstruktur statt, d.h. das weitere Pigment, das enthalten ist, bzw. mehrere Pigmente, die bei dieser Temperatur noch stabil sind, bleiben zurück und der Anwender kann einen entsprechenden Farbwechsel beobachten. Dieser thermoindikative Effekt weist den Anwender darauf hin, dass das Gebilde, welche die erfindungsgemäße Faserstruktur enthält, bereits einmal hohen Temperaturen ausgesetzt war und die Zugfestigkeit des Glases erfahrungsgemäß stark reduziert ist, so dass ein Austauschen des Produktes erforderlich sein wird. Wird ein Pigment eingesetzt, dass einen Zersetzungspunkt kurz unterhalb der Temperatur hat, welches als Höchsttemperatur für die erfindungsgemäße Faserstruktur angegeben ist, kann der Anwender am dem Farbwechsel erkennen, dass die Faserstruktur bereits einmal der Maximaltemperatur ausgesetzt war, so dass von einer stark verminderten Zugfestigkeit des Materials ausgegangen werden muss und dieses ausgetauscht werden sollte.

Um die Haftung zwischen dem Al₂O₃ oder dessen Mischoxid und den ggf. vorhandenen Pigmenten zu verbessern, können ferner so genannte Haftvermittler enthalten sein. Als Haftvermittler eignen sich beispielsweise Silane oder Titanate. Die Silane sind bekannte Haftmittel für den Einsatz bei Gläsern und im Handel erhältlich. Die Haftmittel werden in der Regel wässerigen Ausrüstflüssigkeiten zugesetzt und können in diesen in einer Menge von 0,01 bis 3 Gew.-%, insbesondere von 0,1 bis 2,5 Gew.-%, bezogen auf die Ausrüstungsflüssigkeit, enthalten sein. Die erfindungsgemäßen Faserstruktur weist vorzugsweise das Silan in einer Menge von 0,01 bis 0,5, insbesondere von 0,03 bis 0,1 Gew.-%, bezogen auf die Faserstruktur auf.

Weiterhin kann die erfindungsgemäße Faserstruktur noch weitere übliche Additive enthalten, beispielsweise Bindemittel, UV-Stabilisatoren, Metalle, Griffhilfsmittel, etc. und mit weiteren Oberflächenveredelungsmitteln kombiniert werden.

Die erfindungsgemäße Faserstruktur weist vorzugsweise eine Ausrüstung von insgesamt 0,5 bis 5 Gew.-%, insbesondere von 0,5 bis 3 Gew.-%, bezogen auf die fertige Faserstruktur, auf.

In Abhängigkeit von der Art und der Auswahl des Glases kann durch die erfindungsgemäße Ausrüstung mit Al₂O₃ oder einem Mischoxid davon eine Temperaturbeständigkeit bis 1.250°C erreicht werden. Im Vergleich mit handelsüblichen Produkten auf der Basis von gleichartigen Glasqualitäten kann eine deutliche Temperatursteigerung erreicht werden.

Ein weiterer Gegenstand der vorliegenden Erfindung betrifft ein Verfahren zur Herstellung einer Faserstruktur auf Basis von Glas mit einem SiO₂-Anteil über 50 Gew.-%, bezogen auf das Glas, das dadurch gekennzeichnet ist, dass Glas während des Verarbeitungsschrittes zu einem Filament mit Al₂O₃ oder einem Al₂O₃-Michoxid beaufschlagt wird.

In einer anderen möglichen Herstellungsverfahren wird das Al₂O₃ oder ein entsprechendes Al₂O-Mischoxid in dispergierter Form oder als kolloidale Lösung auf das bereits gezogene Glas, d.h. als Faserstruktur vorliegende Glas, aufgebracht. Vorzugsweise liegt die Al₂O₃-Dispersion bzw. die kolloidale Lösung in flüssiger, fließfähiger oder gelförmiger Form oder als Schaum vor. Die Anlagerung des Oxids kann in an sich bekannter Weise durch Tauchverfahren, Aufsprühen, Bestreichen oder in sonstiger Weise erfolgen. Die auf diese Weise erhaltene Faserstruktur wird in an sich bekannter Weise getrocknet und kann entsprechend weiterverarbeitet werden.

In einer weiteren Ausführungsform enthält die Dispersion von Al₂O₃ bzw. das Mischoxid ein oder mehrere hochtemperaturbeständige(s) Pigment(e), um der erfindungsgemäßen Faserstruktur die gewünschte Färbung zu verleihen.

Eine Verbesserung der Haftung von Al₂O₃ und des optional vorhandenen Pigments kann dadurch erreicht werden, wenn das Glas vor dem Aufbringen von Oxid und ggf. Pigment mit einem Haftvermittler versehen wurde bzw. wenn die Zubereitung des Oxids mit optional enthaltenem Pigment einen solchen Haftvermittler enthält.

Die optional vorhandenen weiteren Komponenten, wie Pigmente, Haftmittel und ggf. weitere Hilfsmittel werden üblicherweise mit dem Al₂O₃ bzw. dem Mischoxid vermischt und stellen die sog. Flotte dar, die auf das bereits gezogene Glas aufgebracht wird.

Nach dem Aufbringen von Al₂O₃ und ggf. Pigment kann die erhaltene Faserstruktur in an sich bekannter Weise weiterverarbeitet und ihrer weiteren Verwendung zugeführt werden.

Ein weiterer Gegenstand der vorliegenden Erfindung betrifft die Verwendung der erfindungsgemäßen Faserstrukturen als Hochtemperaturdämmung, insbesondere in Betonarmierungen, als Bautenschutz, als Schweißschutz, für Schutzbekleidung, wie hochtemperaturbeständige Bekleidung, als Textilien, wie Schutzvorhänge etc., in der Automobilindustrie, z. B. als Isoliermaterial, als Hochtemperaturisolierung in großtechnischen Anlagen insbesondere im Hüttenbereich, in der chemischen Verfahrenstechnik, zur Kabelisolation, wie von Hochstromkabeln, im Hüttenbereich, als Kompensatoren und Schwingungsdämpfer, in Filtrationsverfahren, wie Heißfiltration etc. Besonders hervorzuhebende Anwendungsgebiete sind der Automobilbau, Schiffbau, Kraftwerks- und Anlagenbau, Bandschutztore, Haushaltsgeräte, Abdichtungen, wie Unterlegdichtungen und die Isolierung von thermischen und elektrischen Leitungen sowie Befestigungen, Glaskordel, in Glasrundschnüren als Füllungen für Dehnungsfugen und Heizrohrisolierungen, als Glaspackung, die beispielsweise in Dichtungen für Ofen- und Kesseltüren, als Kanalverbindungen und in Armaturen eingesetzt werden kann, die als Kabel- und Drahtisolation dienen, Rohrumkleidungen und im Kraftwerksbau.

Typische Anwendungen für Bänder sind Dichtungen, Befestigungen und Rohrisolationen. Glaskordel, Glasrundschnur, Glaspackung und Glasschlauch werden als Dichtungswerkstoffe verwendet, texturierte Garne und Nähzwirne werden zur Herstellung von unterschiedlichen Textilien eingesetzt,

### Beispiele

Ein Glasfasergewebe mit einem Gewicht von 1120 g/m² wurde mit Al₂O₃ ausgerüstet. Dazu wurde ein Stück Gewebe mit einer Größe von 20 x 20 cm² in eine Flotte mit einer in der nachfolgenden Tabelle dargestellten Zusammensetzung getaucht:

| **Komponente** | **Gew.-%** |
|---|---|
| Aerodisp (50%ige Dispersion)¹ | 15 |
| Tetraethoxysilan | 0,8 |
| Wasser | Rest auf 100 |
| ¹ Handelsprodukte der Fa. Degussa | |

Das erfindungsgemäß ausgerüstete Glasfasergewebe hatte einen sehr angenehmen Griff, der verglichen mit dem unausgerüstete Glasfasergewebe weniger rau war.

Das ausgerüstete Glasfasergewebe wurde genau wie eine jeweils unausgerüstete Glasfasergewebe Probe bei in der folgenden Tabelle aufgeführten Temperaturen jeweils für 24 Stunden gelagert. Anschließend wurden beide bei einer jeweiligen Temperatur gelagerten Proben nach Abkühlung einer Zugfestigkeitsprüfung unterworfen. Die Ergebnisse sind der der folgenden Tabelle dargestellt.

| Temperaturbelastung [°C ] | Zugfestigkeit N / cm] | |
|---|---|---|
| | Faser gemäß der Erfindung | Unausgerüstete Faser |
| 500 | 564,1 | 277,3 |
| 600 | 614,7 | 240,1 |
| 700 | 399,3 | 185,3 |
| 800 | 453 | 190,0 |
| 900 | 369 | 154,0 |
| 1000 | 414 | 22 |
| 1050 | 381,6 | 5,9 |
| 1100 | 233,6 | 0 |
| 1150 | 193,3 | 0 |
| 1200 | 149 | 0 |

Eine übliche Methode die Brandeigenschaften zu Testen ist die Kantenbeflammung. Das erfindungsgemäße Gewebe zeigt bei der Durchführung dieser Testmethode nach Entfernen der Brennerflamme nach 5 und oder 15 Sekunden kein Weiterbrennen, Weiterglimmen oder Glühen.

## Patentansprüche

1. Faserstruktur auf der Basis von Glas mit einem SiO₂-Anteil über 50 Gewichtsprozent, bezogen auf das Glas,
**dadurch gekennzeichnet,**
**dass** das Glas mit Al₂O₃ oder einem Al₂O₃-Mischoxid ausgerüstet ist.

2. Faserstruktur nach Anspruch 1,
**dadurch gekennzeichnet,**
**dass** es sich um Filamente, Fasern, Fäden, Garne, Zwirne, Schnüre, Bänder, Gewebe, Gelege, Gewirke, Gestricke, Geflechte, Tissues handelt.

3. Faserstruktur nach Anspruch 1 oder 2,
**dadurch gekennzeichnet,**
**dass** das Mischoxid ein Mischoxid aus Al₂O₃ mit SiO₂, TiO₂, ZrO₂ und/oder B₂O₃ ist.

4. Faserstruktur nach einem der Ansprüche 1 bis 3,
**dadurch gekennzeichnet,**
**dass** das Al₂O₃ oder das Mischoxid durch Flammverfahren hergestellt wurde.

5. Faserstruktur nach einem der Ansprüche 1 bis 4,
**dadurch gekennzeichnet**,
das Al₂O₃ bzw. das Mischoxid als Primärteilchen, das auf die Faserstruktur aufgebracht wird, eine Teilchengröße unter 100 nm, insbesondere unter 50 aufweist und auf der ausgerüsteten Faserstruktur als Agglomerat vorliegt, wobei die Teilchengröße dieser Agglomerate liegt vorzugsweise unter 500 nm, insbesondere zwischen 100 und 200, liegt.

6. Al₂O₃ nach einem der Ansprüche 1 bis 5,
**dadurch gekennzeichnet,**
**dass** sie hochtemperaturbeständige Pigmente enthält.

7. Faserstruktur nach Anspruch 6,
**dadurch gekennzeichnet,**
**dass** mindestens ein Pigment enthalten ist, dass eine Temperaturbeständigkeit von 300 bis 500°C unterhalb der Höchstbelastungstemperatur der Faserstruktur hat.

8. Verfahren zur Herstellung einer Faserstruktur nach einem der Ansprüche 1 bis 7,
**dadurch gekennzeichnet,**
**dass** Glas während des Verarbeitungsschrittes zu einem Filament mit Al₂O₃ oder einem Al₂O₃-Michoxid beaufschlagt wird.

9. Verfahren zur Herstellung einer Faserstruktur nach einem der Ansprüche 1 bis 7,
**dadurch gekennzeichnet,**
**dass** eine Faserstruktur auf der Basis von Glas mit einem SiO₂-Anteil über 50 Gewichtsprozent, bezogen auf das Glas, mit einer Dispersion oder kolloidaler Lösung von Al₂O₃ oder einem Mischoxid von Al₂O₃ beaufschlagt wird und die so erhaltene Faserstruktur in an sich bekannter Weise getrocknet wird.

10. Verfahren nach Anspruch 9,
**dadurch gekennzeichnet**,
das Al₂O₃ bzw. das Mischoxid in der Dispersion oder kolloidalen Lösung eine Teilchengröße unter 100 nm, insbesondere unter 50 aufweisen.

11. Verfahren nach Anspruch 10,
**dadurch gekennzeichnet,**
**dass** die Al₂O₃-Dispersion oder kolloidale Lösung als in flüssiger, fließfähiger oder gelförmiger Form oder als Schaum aufgebracht wird.

12. Verfahren nach einem der Ansprüche 8 bis 11,
**dadurch gekennzeichnet,**
**dass** ein Haftvermittler eingesetzt wird.

13. Verfahren nach einem der Ansprüche 8 bis 12,
**dadurch gekennzeichnet,**
**dass** dem Al₂O₃ oder dem Mischoxid hochtemperaturbeständiges Pigment zugefügt wird.

14. Verwendung einer Faserstruktur nach einem der Ansprüche 1 bis 7 als Hochtemperaturdämmung, insbesondere in Betonarmierungen, als Bautenschutz, als Schweißschutz, für Schutzbekleidung, wie hochtemperaturbeständige Bekleidung, als Textilien, wie Schutzvorhänge etc., in der Automobilindustrie, z. B. als Isoliermaterial, als Hochtemperaturisolierung in großtechnischen Anlagen insbesondere im Hüttenbereich, in der chemischen Verfahrenstechnik, zur Kabelisolation, wie von Hochstromkabeln, im Hüttenbereich, als Kompensatoren und Schwingungsdämpfer, in Filtrationsverfahren, wie Heißfiltration etc.
